# EUROPEAN PATENT APPLICATION

(11) **EP 2 073 337 A1**
(43) Date of publication of application: **24.06.2009**
(21) Application number: 06821835.3
(22) Date of filing: 11.10.2006
(51) Int. Cl.: H02J 7/00

(54) **ELECTRONIC DEVICE AND CHARGING CONTROL METHOD**

(71) Applicant: Panasonic Corporation, Kadoma-shi Osaka 571-8501 (JP)
(72) Inventor: FUKASAWA, Toshinori, Osaka 540-6207 (JP); IRIE, Katsunori, Osaka 540-6207 (JP)
(74) Representative: Grünecker, Kinkeldey, Stockmair & Schwanhäusser Anwaltssozietät
(86) International application number: PCT/JP2006/320338
(87) International publication number: WO 2008/044297

(57) **Abstract**

The present invention provides an electronic equipment capable of supplying an electric power to a secondary battery only when the secondary battery must be charged.

A cellular phone of the present invention includes at least two external terminals 11 n connected separately to at least two external power supply units 12n whose electric power supply system is different respectively, for accepting an electric power from the external power supply units 12n, a secondary battery 19 connected to any one of the external terminals 11 n and charged by utilizing the electric power supplied to the external terminals 11 n, a switch 17n for switching any one of the external terminal 11n and connecting the switched external terminal 11 n to the secondary battery 19, and a controlling portion 15 for detecting the external power supply unit 12n connected to the external terminal 11 n and controlling switching of the switch 17n in response to whether or not an electric power supply by the external power supply unit 12n is allowed, which is allocated to the detected external power supply unit 12n.

## Description

### <Technical Field>

The present invention relates to an electronic equipment to which an electric power can be fed from a plurality of external power supply units, e.g., AC power supply unit, non-contact charger, USB (Universal Serial Bus) charger, etc. and, more particularly, an electronic equipment capable of supplying selectively an electric power fed from a plurality of external power supply units to a secondary battery installed in the electronic equipment to charge the secondary battery, and a charging controlling method of switching the external power supply unit that feeds an electric power used to charge the secondary battery.

### <Background Art>

In the mobile information terminal the spread of which is proceeding, the type of secondary battery that can supply again a predetermined output voltage by the charging even though an output voltage is lowered is essential. In addition to the mobile information terminal equipped with the mechanism that charges the secondary battery by the electric power fed from the AC power supply unit, the mobile information terminal equipped with the mechanism that charges the secondary battery by the electric power fed from various chargers such as a non-contact charger, a USB charger, and the like has been proposed nowadays (see Patent Literature 1 to Patent Literature 4, for example).
Patent Literature 1: JP-A-2005-137173
Patent Literature 2: JP-A-2005-006441
Patent Literature 3: JP-A-2005-012889
Patent Literature 4: JP-A-2004-287887

### <Disclosure of the Invention>

### <Problems that the Invention is to Solve>

Out of the mobile information terminals, there is the mobile information terminal that charges the secondary battery by the electric power fed from any one of a plurality of external power supply units each of which is equipped with the mechanism for charging the secondary battery.

However, even when the user of the terminal does not intend to charge the secondary battery, in some cases the mobile information terminal equipped with such mechanism starts automatically the charging of the secondary battery. Such a case is considered by way of example that the mobile information terminal is equipped with the mechanism for charging the secondary battery by using the electric power fed from the computer equipped with a function as the USB charger. At this time, the user of the terminal always connects the mobile information terminal to the computer so as to hold merely the communication between the computer and the mobile information terminal via the USB, nevertheless the computer of this type starts automatically the process of supplying the electric power to the secondary battery that is installed in the mobile information terminal. As a result, the computer is caused to execute the process unnecessary for the user of the terminal.

Also, the mobile information terminal equipped with such mechanism does not always charge effectively the secondary battery. Then, the case that the mobile information terminal is equipped with the mechanism for charging the secondary battery by using the electric power fed selectively from the AC power supply unit and the computer with a function as the USB charger is taken as an example. The computer when connected to the mobile information terminal via the USB starts the process of supplying the electric power to the secondary battery installed in the mobile information terminal. In this event, the secondary battery installed in the computer (in order to distinguish this battery from the secondary battery installed in the mobile information terminal, the secondary battery installed in the computer is referred to as a "host secondary battery" hereinafter whereas the secondary battery installed in the mobile information terminal is referred to as a "device secondary battery" hereinafter) starts the process of supplying the electric power to the device secondary battery installed in the mobile information terminal even in the period that such secondary battery is not connected to the AC power supply unit for the computer and the charging is not continued. At this time, the computer charges the device secondary battery by distributing the electric power accumulated in the host secondary battery to this device secondary battery. In this case, it is preferable that the mobile information terminal should switch the power supply unit used for the charging such that the host secondary battery can charge the device secondary battery by using the electric power fed from the AC power supply unit for the mobile information terminal in the period that the charging made by using the AC power supply unit for the computer is not continued. However, like the mobile information terminal in the prior art, the electric power could not be fed to the secondary battery installed in the mobile information terminal from the optimum external power supply unit.

The present invention has been made in view of the above circumstances, and it is an object of the present invention to provide an electronic equipment and a charging controlling method, capable of supplying an electric power to a secondary battery only when the secondary battery must be charged.

Also, it is another object of the present invention to provide an electronic equipment and a charging controlling method, capable of charging a secondary battery by using an optimum external power supply unit out of a plurality of external power supply units.

### <Means for Solving the Problems>

An electronic equipment of the present invention includes at least two external power supply connecting portions connected separately to at least two external power supply units whose electric power supply system is different respectively, for accepting an electric power from the external power supply units; a secondary battery connected to any one of the external power supply connecting portions, and charged by utilizing the electric power supplied to the external power supply connecting portions; a switching portion for switching any one of the external power supply connecting portions and connecting the switched connecting portion to the secondary battery; and a switching controlling portion for detecting the external power supply unit connected to the external power supply connecting portions, and controlling switching of the switching portion in response to whether or not an electric power supply by the external power supply unit is allowed, which is allocated to the detected external power supply unit.

A charging controlling method of the present invention of supplying an electric power to a secondary battery installed into an electronic equipment from any one of at least two external power supply units whose electric power supply system is different respectively, includes detecting the external power supply unit connected to the electronic equipment; referring to whether or not an electronic power supply by the external power supply unit is allowed, which is allocated to the detected external power supply unit; and supplying the electric power from the external power supply unit that is allowed to supply the electric power to the secondary battery.

According to this configuration, the external power supply unit for supplying the electric power to the secondary battery can be decided in response to the criterion that is set every external power supply unit to indicate whether or not the charging of the secondary battery installed into that cellular phone by the concerned external power supply unit is allowed. Therefore, such a situation can be prevented that the electric power is supplied unnecessarily by the external power supply unit which is not requested by the user of the cellular phone to supply the charging electric power to the secondary battery.

An electronic equipment of the present invention includes at least two external power supply connecting portions connected separately to at least two external power supply units whose electric power supply system is different respectively, for accepting an electric power from the external power supply units; a secondary battery connected to any one of the external power supply connecting portions, and charged by utilizing the electric power supplied to the external power supply connecting portions; a switching portion for switching any one of the external power supply connecting portions and connecting the switched connecting portion to the secondary battery; and a switching controlling portion for detecting the external power supply unit connected to the external power supply connecting portions, and controlling switching of the switching portion in response to priority that is allocated to the detected external power supply unit.

A charging controlling method of the present invention of supplying an electric power to a secondary battery installed into an electronic equipment from any one of at least two external power supply units whose electric power supply system is different respectively, includes detecting the external power supply unit connected to the electronic equipment; referring to priority that is allocated to the detected external power supply unit; and supplying the electric power from the external power supply unit whose allocated priority is higher to the secondary battery.

Also, in the electronic equipment of the present invention, the switching controlling portion connects the external power supply unit whose allocated priority is highest among the detected external power supply units to the secondary battery.

According to this configuration, the external power supply unit for supplying the electric power to the secondary battery can be decided in response to the priority that is set every external power supply unit to decide the order in which the electric power should be supplied to the secondary battery. Therefore, by using the optimum external power supply unit, the secondary battery can be charged.

Also, in the electronic equipment of the present invention, the external power supply connecting portions contain at least a first external power supply connecting portion and a second external power supply connecting portion, the first external power supply connecting portion is connected to a first external power supply unit of at least two external power supply units, the second external power supply connecting portion is connected to a second external power supply unit of at least two external power supply units, and the switching controlling portion for switching the external power supply connecting portion to the second external power supply connecting portion when connection of the second external power supply unit, priority of which is higher than the first external power supply unit, to the second external power supply connecting portion is detected after the first external power supply connecting portion is connected to the secondary battery, and then connecting the second external power supply connecting portion to the secondary battery.

In the electronic equipment of the present invention, the external power supply connecting portions contain at least a first external power supply connecting portion and a second external power supply connecting portion, the first external power supply connecting portion is connected to a first external power supply unit of at least two external power supply units, the second external power supply connecting portion is connected to a second external power supply unit of at least two external power supply units, and the switching controlling portion for connecting continuously the first external power supply connecting portion to the second battery when connection of the second external power supply unit, priority of which is lower than the first external power supply unit, to the second external power supply connecting portion is detected after the first external power supply connecting portion is connected to the secondary battery.

According to this configuration, when the newly connected external power supply unit is preferable to charge the secondary battery, the charging is started by switching the connected external power supply unit to the new external power supply unit. Therefore, by the optimum external power supply unit the secondary battery installed into the electronic equipment can always be charged.

Also, the electronic equipment of the present invention further includes an operating portion for accepting an inputting operation; wherein the operating portion accepts the inputting operation to set whether or not an electric power supply allocated to at least two external power supply units is allowed, and the switching controlling portion controls switching of the switching portion in response to whether or not an electric power supply by the external power supply unit is allowed, which is accepted by the operating portion and allocated to the external power supply units.

Also, the electronic equipment of the present invention further includes an operating portion for accepting an inputting operation; wherein the operating portion accepts the inputting operation to set the priority allocated to at least two external power supply units, and the switching controlling portion controls switching of the switching portion in response to the priority accepted by the operating portion and allocated to the external power supply unit.

According to this configuration, the secondary battery can be charged without fail by the external power supply unit that the user of the electronic equipment intends to use as the external power supply for use in the charging.

Also, the electronic equipment of the present invention further includes a storing portion for storing various information; wherein the storing portion stores whether or not an electric power supply is allowed, which is accepted by the operating portion and is allocated to the external power supply units, and the switching controlling portion controls switching of the switching portion in response to whether or not an electric power supply by the external power supply unit is allowed, which is stored in the storing portion and is allocated to the external power supply units.

Also, the electronic equipment of the present invention further includes a storing portion for storing various information; wherein the storing portion stores the priority that is allocated to the external power supply units, and the switching controlling portion controls switching of the switching portion in response to the priority that is allocated to the external power supply units.

According to this configuration, when the external power supply unit that the user of the electronic equipment intends to use as the external power supply for use in the charging is set once, the secondary battery can be charged automatically by the optimum external power supply unit.

Also, the electronic equipment of the present invention further includes a preliminary charging controlling portion driven by a second electric power that is smaller than a first electric power required to cause the switching controlling portion to perform switching control; wherein the preliminary charging controlling portion detects the external power supply units connected to the external power supply connecting portions, and controls switching of the switching portion in response to the priority that is allocated fixedly to the detected external power supply unit.

According to this configuration, even when the switching controlling portion is in a non-operation state, the electric power can be supplied to the secondary battery by the external power supply unit whose priority is highest out of the external power supply units that are detected such that they can supply the electric power.

Also, in the electronic equipment of the present invention, any one of at least two external power supply connection portions is a USB terminal that accepts the electric power supplied from the external power supply unit via USB (Universal Serial Bus).

Also, in the electronic equipment of the present invention, any one of at least two external power supply connection portions is an AC power supply terminal that accepts the electric power supplied from the external power supply unit as an AC power supply.

Also, in the electronic equipment of the present invention, any one of at least two external power supply connection portions is a receiving coil that receives the electric power transmitted from the external power supply unit by an electromagnetic induction system.

According to this configuration, various existing external power supplies can be applied as the external power supply units that are used to charge the electronic equipment of the present invention.

### <Advantages of the Invention>

According to the electronic equipment and the charging controlling method of the present invention, an electric power can be supplied to the secondary battery only when the secondary battery must be charged. Also, by using the optimum external power supply unit out of a plurality of external power supply units, the secondary battery can be charged.

### <Brief Description of the Drawings>

FIG.1 is a schematic view explaining a charging process by a cellular phone of embodiments of the present invention.
FIG.2 is a functional block diagram of a cellular phone of a first embodiment of the present invention.
FIG.3 is a conceptual view of charging setting contents that a storing portion in the first embodiment of the present invention stores as data.
FIG.4 is a view of a circuit example of a preliminary charging setting portion in the cellular phone of the first embodiment of the present invention.
FIG.5 is a flowchart showing a flow of a switching process of an external power supply unit by using the cellular phone of the first embodiment of the present invention.
FIG.6 is a flowchart showing a flow of a charging process through a USB host by using the cellular phone of the first embodiment of the present invention.
FIG.7 is a view of a display example displayed at a time of charging by using the cellular phone of the first embodiment of the present invention, wherein FIG. 7(a) is a display example 1 displayed at a time of charging by using the cellular phone of the first embodiment of the present invention, FIG. 7(b) is a display example 2 displayed at a time of charging by using the cellular phone of the first embodiment of the present invention, and FIG. 7(c) is a display example 3 displayed at a time of charging by using the cellular phone of the first embodiment of the present invention.

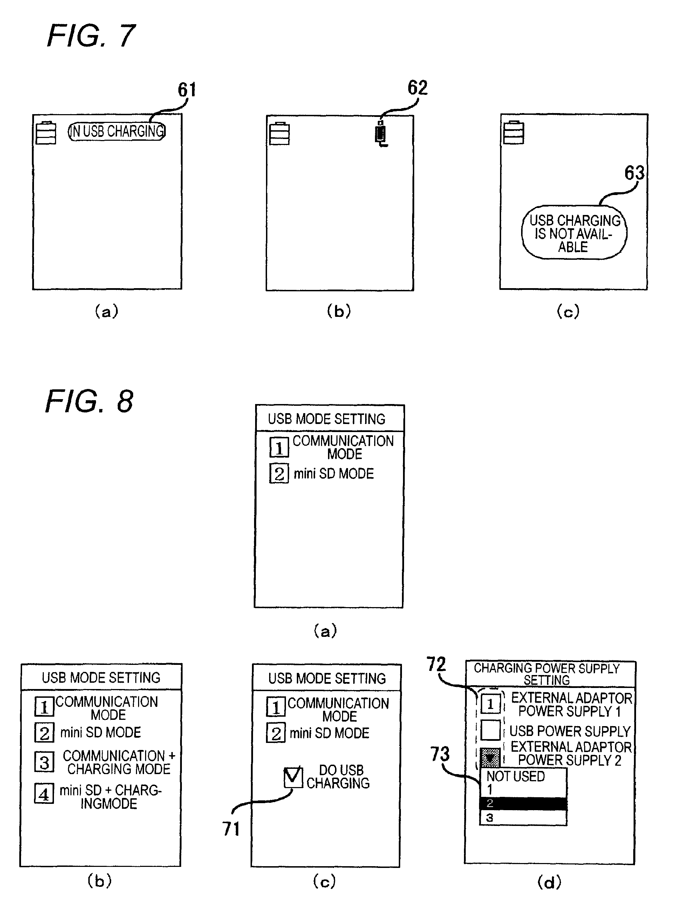

FIG.8 is a view of a display example displayed on a display of a cellular phone of a second embodiment of the present invention, wherein FIG. 8(a) is a display example that calls upon the user to set a mode at a time of USB communication by using a cellular phone in the prior art, FIG.8(b) is a display example 1 that calls upon the user to set a mode at a time of USB communication by using a cellular phone of the second embodiment of the present invention, FIG.8(c) is a display example 2 that calls upon the user to set the mode at a time of USB communication by using the cellular phone of the second embodiment of the present invention, and FIG.8(d) is a display example that calls upon the user to set priority of the external power supply units by using the cellular phone of the second embodiment of the present invention.

### <Description of Reference Numerals and Signs>

1 cellular phone
2 AC charging connector 2
3 non-contact charging table 3
4 device side connector
5 host side connector
111 to 11N external terminal
12 USB terminal
121 to 12N external power supply unit
130 to 13N power supply detecting portion
14 USB interface portion
15 controlling portion
16 storing portion
170 to 17N switch
18 charging circuit portion
19 secondary battery
20 preliminary charging setting portion
21 displaying portion
22 inputting portion
210 to 21 N input terminal
220 to 22N output terminal
231 to 23N logical inverting circuit
241 to 24N logical product circuit
61, 63 message
62 mark
71 check box
72 column into which a numerical value is input
73 pull-down menu

### <Best Mode for Carrying Out the Invention>

Electronic equipments according to embodiments of the present invention will be explained hereinafter. Explanation will be made hereunder by taking a cellular phone as an example of the electronic equipment of the present invention. But the electronic equipment of the present invention is not limited to the cellular phone. All electronic equipments that can charge a secondary battery by using an electric power fed from any one of a plurality of external power supply units in the situation that a mechanism for charging the secondary battery is provided to a plurality of external power supply units respectively are contained in a scope of the present invention.

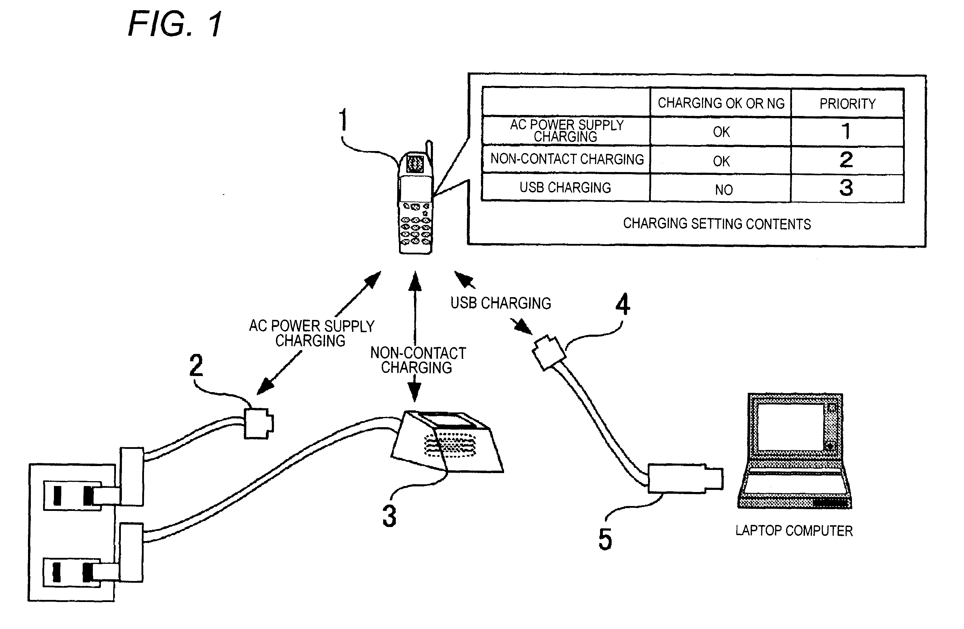

First, an outline of the cellular phone of the embodiments of the present invention will be explained hereunder. In FIG.1, a schematic view explaining a charging process by a cellular phone of embodiments of the present invention is shown. Out of the recent mobile information terminals, there is the mobile information terminal that charges the secondary battery by using the electric power fed from any one of a plurality of external power supply units in the situation that a mechanism for charging the secondary battery installed in the terminal is provided to a plurality of external power supply units respectively. A cellular phone 1 of the embodiments of the present invention shown in FIG.1 is equipped with the mechanism that charges the secondary battery by using an electric power fed from the external power supply unit such as an AC power supply, a non-contact charging, a USB host (which denotes the terminal to which the device is connected. In FIG.1, a laptop computer to which the cellular phone 1 as the device is connected corresponds to the host. In this case, the device is connected to a device side connector 4 constituting one end of the USB cable, and the host is connected to a host side connector 5 constituting the other end), or the like. The cellular phone 1 is connected to an AC charging connector 2 or the device side connector 4 as one end of the USB cable, or is placed on a non-contact charging table 3. When the cellular phone 1 detects that the external power supply units are connected, this cellular phone switches selectively any of the external power supply units and connects it to the secondary battery, and transmits the electric power fed from the connected external power supply unit to the secondary battery.

The cellular phone 1 of the embodiments of the present invention executes the process explained as follows when it detects that a plurality of external power supply units are connected, and switches selectively any of the external power supply units and connects it to the secondary battery. In other words, in the cellular phone 1 of the embodiments of the present invention, charging setting contents are stored as information every external power supply unit. The charging setting contents consist of "charging OK or NG" used to discriminate whether or not the concerned external power supply unit is allowed to do the charging of the secondary battery, and "priority" used to decide the order of priority in which the electric power should be fed preferentially to the secondary battery.

For example, when the cellular phone 1 of the embodiments of the present invention detects that this phone is connected to the AC power supply via the AC charging connector 2, it refers to the "charging OK or NG" of the AC power supply charging to decide whether or the charging is allowed. Then, when the cellular phone 1 decides that the charging is allowed, this phone connects a power supply line from the AC power supply to the secondary battery, and then transmits the electric power fed from the AC power supply to the secondary battery. In contrast, when the cellular phone 1 detects that this phone is connected to the USB host via the USB cable, it refers to the "charging OK or NG" of the USB charging to decide whether or the charging is allowed. Then, when the cellular phone 1 decides that the charging is not allowed, this phone does not execute the process of charging the secondary battery from the USB host.

In this manner, according to the cellular phone 1 of the embodiments of the present invention, this phone decides the external power supply unit that feeds the electric power to the secondary battery, in response to whether or not the charging of the secondary battery installed in this cellular phone is allowed, which is set every external power supply unit. As a result, such a situation can be prevented that the electric power is fed unnecessarily by the external power supply unit of which it is not required by the user of the cellular phone that the electric power should be fed to charge the secondary battery.

Also, for example, when the cellular phone 1 of the embodiments of the present invention detects simultaneously the event that this phone is placed on the non-contact charging table 3 and the event that this phone is connected to the USB host, it refers to respective "priorities" of the non-contact charging and the USB charging. Then, when the cellular phone 1 decides that the "priority" of the non-contact charging is higher, this phone connects a power supply line from the non-contact charging table 3 to the secondary battery, and then transmits the electric power fed from the non-contact charging table 3 to the secondary battery. Then, when the cellular phone 1 detects that this phone is connected to the AC power supply, it refers to respective "priorities" of the AC power supply charging, the non-contact charging, and the USB charging. Also, when the cellular phone 1 decides that the "priority" of the AC power supply charging is highest, this phone connects the power supply line from the AC power supply to the secondary battery, and then transmits the electric power fed from the AC power supply to the secondary battery.

In this manner, according to the cellular phone 1 of the embodiments of the present invention, this phone decides the external power supply unit that feeds the electric power to the secondary battery, in response to the priority in which the order of priority applied in feeding the electric power to the secondary battery is decided and which is set every external power supply unit. As a result, by using the optimum external power supply unit, the secondary battery can be charged. Next, cellular phones of respective embodiments of the present invention will be explained in detail hereinafter.

### (First Embodiment)

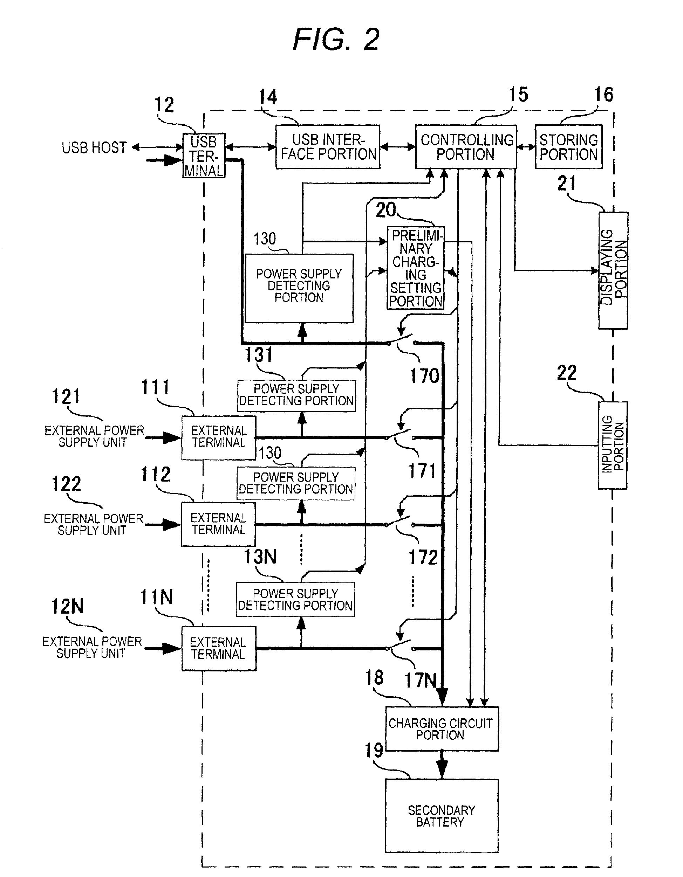

In FIG.2, a functional block diagram of a cellular phone of a first embodiment of the present invention is shown. The cellular phone 1 of the first embodiment of the present invention is constructed to include n-th external terminals 11n (n=1, 2,.., N), a USB terminal 12, n-th power supply detecting portions 13n (n=1, 2,.., N), an USB interface portion 14, a controlling portion 15, a storing portion 16, n-th switches 17n (n=1, 2,.., N), a charging circuit portion 18, a secondary battery 19, a preliminary charging setting portion 20, a displaying portion 21, and an inputting portion 22. In FIG.2, arrow lines extended from n-th external power supply units 12n to the secondary battery 19 via the n-th external terminals 11n, the n-th switches 17n, and the charging circuit portion 18 (thick lines) and arrow lines extended from the USB host to the secondary battery 19 via the USB terminal 12, the switch 170, and the charging circuit portion 18 (thick lines) indicate a flow of the electric power respectively, and other arrow lines (thin lines) indicate the input/output of signals.

The n-th external terminals 11 n are the terminals that are connected to the power supply lines extended from various external power supply units 12n (n=1, 2,.., N). The n-th external terminals 11n connected to the power supply lines from the AC power supplies considered as the external power supply units are constructed by the terminals to which the AC adaptor is connected, or the metal portions (also called as the contact terminal herein) connected electrically to conductive projection portions in the charger connected to the AC adaptor or molded integrally with the AC adaptor. Also, the n-th external terminals 11 n for receiving the electric power transmitted from the non-contact charger considered as the external power supply unit by virtue of the electromagnetic induction are formed by a coil respectively.

The USB terminal 12 is the terminal that is connected to the device side connector constituting one end of the USB cable.

The n-th power supply detecting portions 13n detect whether or not the electric power is being fed from the USB host or the external power supply units 12n. As a concrete detecting process, when it is detected electrically that the power supply connectors provided to the external power supply units 12n are connected electrically to the n-th external terminals 11 n, the n-th power supply detecting portions 13n decided that the electric power is being fed from the external power supply unit. Also, as another concrete detecting process, when it is detected that a voltage measured in the n-th external terminals 11 n exceeds a predetermined numerical value, the n-th power supply detecting portions 13n decided that the electric power is being fed from the external power supply unit. In particular, it may be considered that the 0-th power supply detecting portion 130 detects that the USB interface portion 14 described later has been shifted to a configuration state. Then, when it is decided that the electric power is being fed from the external power supply units 12n, the n-th power supply detecting portions 13n output the signal indicating this effect to the controlling portion 15.

The USB interface portion 14 gets into USB communication with the USB host connected to the USB terminal 12. Since the communication process between the host and the device utilizing the USB has been publicly known, such communication process will not explained in detail in this specification. On the contrary, since the power supply process for supplying the electric power from the host to the device by utilizing the USB is concerned with the present invention, main points of the USB communication with regard to the power supply process will be explained hereunder.

As shown in FIG.1, when the cellular phone 1 as the device is connected to the laptop computer as the host via the USB cable, the state is transferred as follows as the enumeration process of the USB. That is, when the USB confirms a reset signal via an attached state (Attached) and a powered state (Powered), it goes to a default state (Default). Then, when an address is assigned to the USB from the host, the USB goes to an address state (Address). Then, the host (laptop computer) reads a configuration descriptor of the device to bring the device into a configuration state (Configured), and then the host brings the device into a configuration state after such host confirmed that the device can be transferred the configuration state. Thus, the communication utilizing the USB can be established. In contrast, the device (the cellular phone 1) declares that such device is the bus power supply device as the USB device by using bm Attributes of the configuration descriptor when the configuration descriptor is read by the host, and declares a maximum electric energy that is required of the device in operation or a maximum electric current 500 [mA] that can be set as the electric power supply, as Max Power. Through this process, the device (the cellular phone 1) may consume the electric power (or the electric current) whose upper limit is set to the declared maximum electric energy (or the maximum electric current 500 [mA]), from the host (laptop computer).

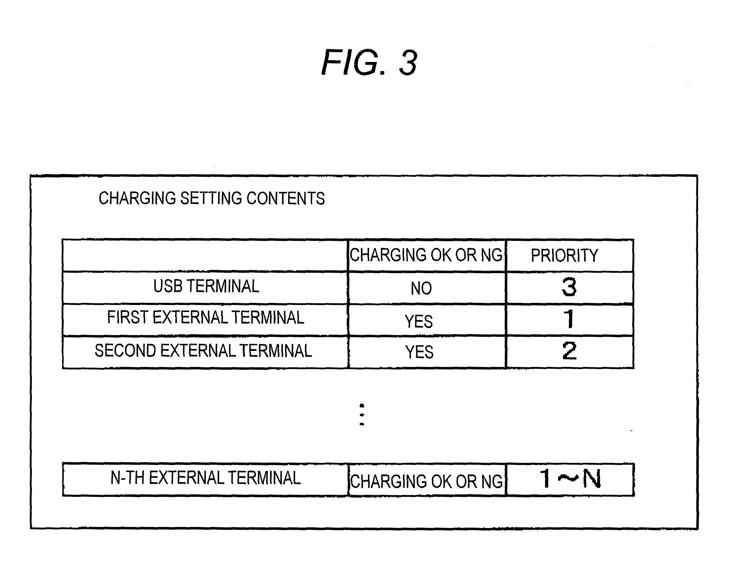

When the controlling portion 15 receives a signal indicating that the electric power is being fed from the external power supply unit 12n from the n-th power supply detecting portion 13n, such portion refers to the charging setting contents stored in the storing portion 16 and controls ON/OFF of the switch 17n. The CPU and the memory installed in the recent cellular phone fulfill respective functions of the controlling portion 15 and the storing portion 16. In FIG.3, a conceptual view of charging setting contents that the storing portion in the first embodiment of the present invention stores as data. The storing portion 16 stores the "charging OK or NG" and the "priority". When the controlling portion 15 receives the signal indicating that the electric power is fed from the external power supply unit 121 from the power supply detecting portion 131, it refers to the "charging OK or NG" of the external terminal 111 stored in the storing portion 16. When the controlling portion 15 decides that the charging is allowed, it connects the power supply line extended from the external power supply unit 121 to the charging circuit portion 18 by closing the switch 171. In contrast, when the controlling portion 15 receives the signal indicating that the electric power is being fed from the USB host from the power supply detecting portion 130, it refers to the "charging OK or NG" of the USB terminal 12 stored in the storing portion 16. When the controlling portion 15 decides that the charging is not allowed, it does not connect the power supply line extended from the USB host to the charging circuit portion 18 by keeping the opened state of the switch 170.

Also, for example, when the controlling portion 15 receives simultaneously the signal indicating that the electric power is fed from the external power supply unit 121 from the power supply detecting portion 131 and the signal indicating that the electric power is being fed from the USB host from the power supply detecting portion 130, and then refers respective "priorities" of the second external terminal 112 and the USB terminal 12 and then decides that the priority of the second external terminal 112 is higher, it connects the power supply line extended from the external power supply unit 122 to the charging circuit portion 18 by closing the switch 172. Also, when the controlling portion 15 receives the signal indicating that the electric power is fed from the external power supply unit 121 from the power supply detecting portion 131 and then refers respective "priorities" of the first external terminal 111, the second external terminal 112 and the USB terminal 12 and then decides that the priority of the first external terminal 111 is highest, it connects the power supply line extended from the external power supply unit 121 to the charging circuit portion 18 by closing the switch 171.

The process of switching the switch 17n done when the controlling portion 15 refers to the "charging OK or NG" stored in the storing portion 16 and the process of switching the switch 17n done when the controlling portion 15 refers to the "priority" are set forth separately. In this case, when the charging is not allowed even though the highest priority is set to the n-th external terminal 11 n among the external terminals from which the power supply is detected, the state that the switch 17n is opened may be still kept by combining these processes together.

The charging circuit portion 18 has a transformer circuit and a rectifier circuit, and converts the supply voltage fed from the external power supply unit 12n into the rated voltage (rated electric current) fed to the secondary battery 19 and then supplies this rated voltage (this rated electric current) to the secondary battery 19. A charging electric current value corresponding to each switch 17n is set to the charging circuit portion 18, and the charging circuit portion 18 supplies the electric power to the secondary battery 19 in response to the charging electric current value.

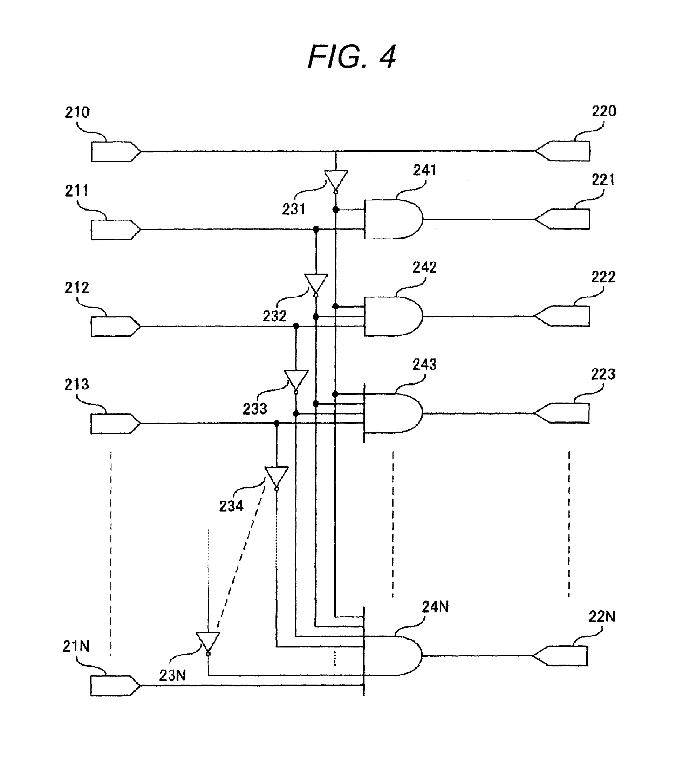

When the controlling portion 15 is not in operation, e.g., when a battery energy enough to operate the controlling portion 15 does not remain in the secondary battery 19, when a power switch of the cellular phone 1 is turned OFF, when the program that the controlling portion 15 runs is not loaded just after the cellular phone 1 is powered, or the like, the preliminary charging setting portion 20 closes the switch 17n corresponding to the external power supply unit 12n, the predetermined priority of which (the same priority as that stored in the storing portion 16 may be employed as this priority, but the order of this priority is unchangeable since the preliminary charging setting portion 20 is constructed to mechanically switch ON/OFF of the switch 17n) is highest out of the external power supply units or the USB hosts, by utilizing a low electric current fed from the external power supply unit or the USB host connected to the n-th external terminal 11 n (called as a "low electric current" in a sense that this electric current value is lower than the electric current value fed when the controlling portion 15 is operating), and feeds the electric power fed from the external power supply unit 12n to the charging circuit portion 18. The process of supplying the electric power to the secondary battery 19 made by the preliminary charging setting portion 20 is called a preliminary charging process. In FIG.4, a circuit example of the preliminary charging setting portion 20 in the cellular phone of the first embodiment of the present invention is shown.

The preliminary charging setting portion 20 has input terminals 21 n (n=0, 1, 2,.., N) for receiving output signals from the power supply detecting portion 13n (n=0, 1, 2,.., N), output terminal 22n (n=0, 1, 2,.., N) for outputting input signals to the switch 17n (n=0, 1, 2,.., N), inverter circuits 23n (n=1, 2,.., N), and logical product circuits 24n (n=0, 1, 2,.., N). The output terminal 220 is connected to the input terminal 210. The output terminal 221 is connected to the logical product circuit 241 that receives signals fed from the input terminal 211 and the inverter circuit 231 that inverts the input from the input terminal 210. The output terminal 22N is connected to the logical product circuit 24N that receives signals fed from the input terminal 21 N and the inverter circuits 231, 232,.., 23N that are connected to the input terminal 210 to the input terminal 21n (n=N-1) respectively. In the circuit example of the preliminary charging setting portion 20 shown in FIG.4, the order of priority is set higher sequentially from the input terminal 210 to the input terminal 21 N.

According to this circuit, when the logical product circuit 24n receives the signal from at least one of the input terminals 210, 211,.., 21(n-1) whose order of priority is higher, it does not outputs the signal being input from the input terminal 21 n to the output terminal 22n to which the output signal is to be output. In contrast, the logical product circuit 24n outputs the signals from the input terminals 210, 211,.., 21(n-1) to the output terminals 220, 221,.., 22(n-1) corresponding to these input terminals in order of higher priority. Therefore, even when the controlling portion 15 is in a non-operation state, the preliminary charging setting portion 20 can feed the electric power to the secondary battery 19 by the external power supply unit 12n whose priority is highest, out of the external power supply units 12n whose electric power feedable state is detected by the power supply detecting portion 13n. In this case, the charging electric current values are set to the charging circuit portion 18 to correspond to the output terminals 22n, and the charging circuit portion 18 feeds the electric power to the secondary battery 19 based on the charging electric current value.

When the displaying portion 21 receives display data stored in the working RAM or the video RAM constituting the storing portion 16 from the controlling portion 15, it displays/ outputs an image constructed based on the display data. In the cellular phone, the displaying portion 21 is constructed by LCD, or the like.

The inputting portion 22 is composed of a key panel containing a cruciform key, 0 to 9, *, #, etc. that the recent cellular phone has, keys to which various functions are allocated, a QWERTY keyboard, and the like. The inputting portion 22 receives the inputting operation from the user of the cellular phone.

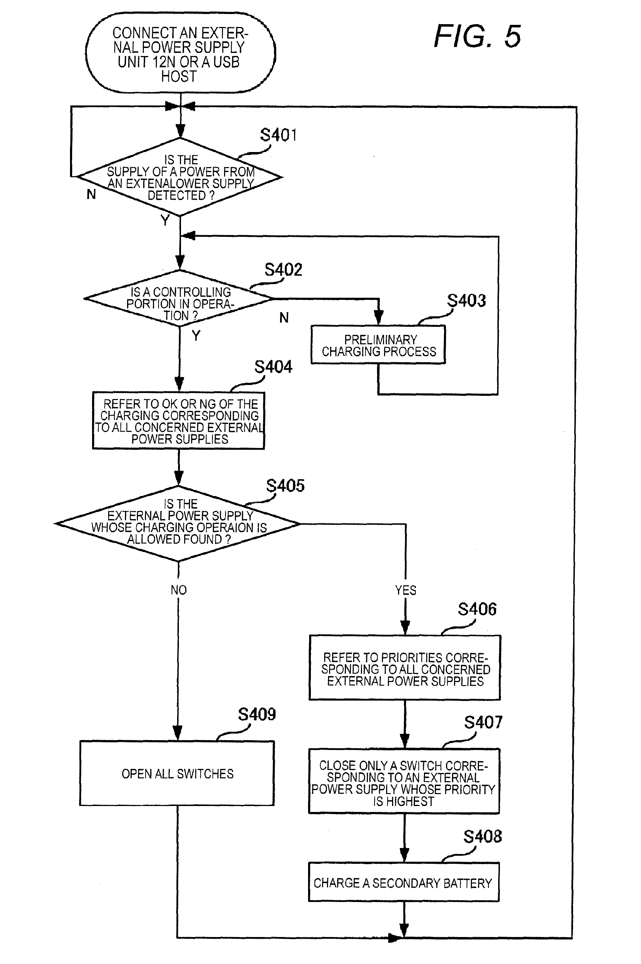

Next, a process of switching the external power supply unit by using the cellular phone of the first embodiment of the present invention when the secondary battery is charged will be explained hereunder. In FIG.5, a flowchart explaining a flow of the switching process of the external power supply unit by using the cellular phone of the first embodiment of the present invention is shown.

When the user of the cellular phone connects the external power supply unit 12n to the external terminal 11n or connects the USB host to the USB terminal 12, the cellular phone 1 detects whether or not the electric power is being fed from the external power supply 12n or the USB host (step S401). At this time, if the controlling portion 15 is not in operation (step S402, N), the cellular phone 1 starts the preliminary charging process step S403). Thus, by supplying the electric power fed from any one of the connected external power supply unit 12n and the USB host, the secondary battery 19 is charged. Then, if the controlling portion 15 is operated (step S402, Y), the cellular phone 1 reads the "charging OK or NG" corresponding to all the external power supply 12n and the USB host, which are detected such that they are feeding the electric power, from the storing portion 16 (step S404).

Then, if the cellular phone 1 decides that a total number of "OK" in the "charging OK or NG" of all the external power supply 12n and the USB host, which are detected such that they are feeding the electric power, is 0 (step S405, no), it opens all switches (step S409). Then, the process goes back to step S401, and the cellular phone 1 monitors again whether or not the electric power is being fed from the external power supply 12n or the USB host.

In contrast, if the cellular phone 1 decides that a total number of "OK" in the "charging OK or NG" of all the external power supply 12n and the USB host, which are detected such that they are feeding the electric power, is 1 or more (step S405, yes), this phone reads the "priorities" corresponding to the external terminals 11 n and the USB terminal 12, to which all the external power supply units 12n and the USB host are connected, from the storing portion 16 (step S406). Then, the cellular phone 1 closes the switch 17n corresponding to the external terminal 11 n or the USB terminal 12, to which the "highest priority" is allocated, among them (step S407), and the cellular phone 1 starts the charging of the secondary battery 19(step S408). Then, the process goes back to step S401, and the cellular phone 1 monitors again whether or not the electric power is being fed from the external power supply 12n or the USB host.

In the flowchart in FIG.5, the process applied commonly when the external power supply unit 12n or the USB host are connected to the cellular phone 1 of the first embodiment of the present invention is explained. In this case, when the power supply process is executed between the cellular phone 1 and the USB host, the cellular phone 1 of the first embodiment of the present invention must establish the USB communication by executing the enumeration process of the USB, declare that the device is the bus power supply device as the USB device by using bm Attributes of the configuration descriptor when the configuration descriptor is read by the USB host, and declare that the maximum electric energy that is required of the device in operation or the maximum electric current 500 [mA] that can be set as the electric power supply, as Max Power. A flow of the charging process executed through the USB host by the cellular phone 1 of the first embodiment of the present invention will be explained hereunder.

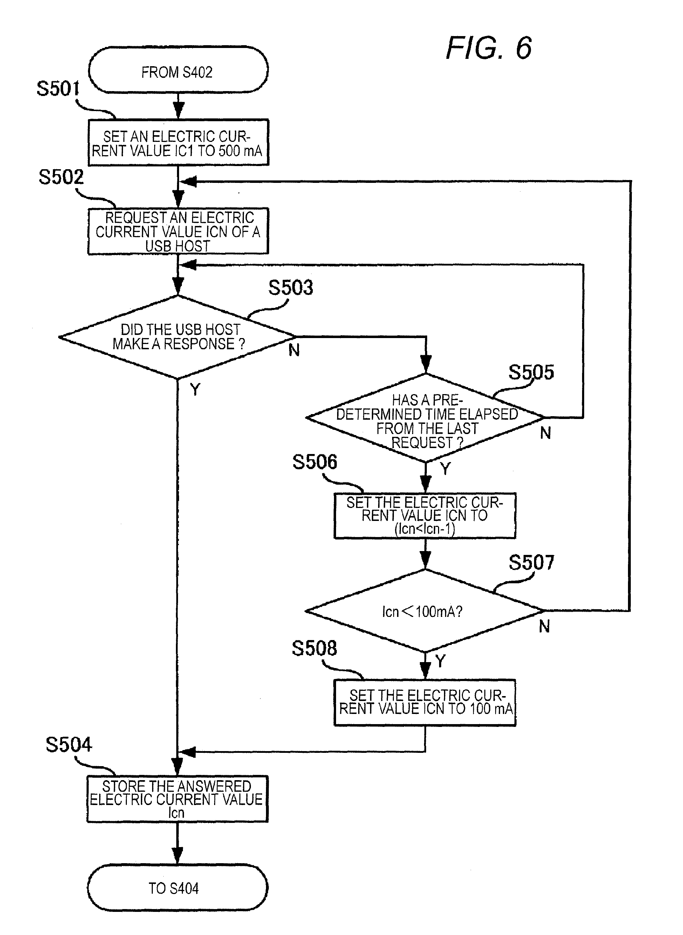

An outline the bus enumeration process that made by the cellular phone 1 to the USB terminal 12 of which the USB host is connected will be given as follows. That is, after the controlling portion 15 is operated (step S402), the cellular phone 1 as the device that is transferred to an address state requests the electric current value, which is necessary for its own phone, of the USB host. In contrast, when the USB host that accepted the request of the electric current value allows the requested electric current value, it shifts the cellular phone 1 into the configuration state by advancing the enumeration process, and then supplies the electric power to the cellular phone 1 at the requested electric current value. On the contrary, when the USB host does not allow the requested electric current value, it does not respond to the cellular phone 1 and suspends the enumeration process until the electric current value requested by the cellular phone 1 goes to the allowable value. In FIG.6, a flowchart explaining a flow of the charging process through the USB host by using the cellular phone of the first embodiment of the present invention is shown.

When the cellular phone 1 to the USB terminal 12 of which the USB host is connected is shifted to the address state after the controlling portion 15 is operated (step S402), this phone sets the maximum value 500 mA that this phone can demand of the USB host as an electric current value Ic1 (step S501). Then, the cellular phone 1 requests the electric current value Ic1 of the USB host (step S502). If the USB host made a response to this request (step S503, Y), the cellular phone 1 causes the storing portion 16 to store the electric current value Ic1=500 [mA] as the electric current from the USB host at a time of supplying the electric power (step S504). In contrast, if a predetermined time has elapsed as a period in which the USB host makes no response to the request after the electric current value Ic1 is requested (step S505, Y), the cellular phone 1 sets 400 [mA], which is smaller than the electric current value Ic1=500 [mA], as an electric current value Ic2 that this phone requests of the USB host (step S506). Then, the cellular phone 1 requests the electric current value Ic2 of the USB host (step S502). The cellular phone 1 sets the electric current value Icn (n=1, 2,.., N) small (step S506) and continues to request the electric current value of the USB host until a response is made to the request by the USB host (step S503, Y) or until the electric current value falls below a lower limit value 100 [mA] that is guaranteed by the USB standard (step S507, Y)(In this case, when the USB charging is not executed but the communication is held between the USB host and the cellular phone, a lower limit value of the electric current value Icn is not limited to 100 [mA]). If the response is made to the requested electric current value Icn (step S503, Y), the cellular phone 1 stores the electric current value Icn in the storing portion 16 as the electric current at a time of supplying the electric power from the USB host. Then, the cellular phone 1 reads the "charging OK or NG" of the external power supply 12n and the USB host, which are detected such that they are feeding the electric power, from the storing portion 16 (S404).

Then, if the charging by the USB is allowed (step S405, yes) when the cellular phone 1 refers to the "charging OK or NG" stored in the storing portion 16 in the process in step S405, the cellular phone 1 sets the electric current value Icn stored in the storing portion 16 to the charging circuit portion 18 and causes the charging circuit portion 18 to feed the electric power to the secondary battery 19 (step S408). In this case, when the USB communication with the USB host is reset or the connection to the USB host cannot be detected, the cellular phone 1 resets the stored electric current value Icn.

In the charging utilizing the USB, the electric current fed from the USB host has not a constant value. Therefore, in supplying the electric power to the secondary battery 19, such a control must be applied that the electric current value Ic fed from the USB host is detected and the secondary battery 19 is charged by this electric current value Ic. The cellular phone of the first embodiment of the present invention can respond to the variable electric current value Ic fed from the USB host by executing the foregoing control.

With the above, according to the cellular phone of the first embodiment of the present invention, the external power supply unit for supplying the electric power to the secondary battery can be decided in response to the criterion that is set every external power supply unit to indicate whether or not the charging of the secondary battery installed into that cellular phone by the concerned external power supply unit is allowed. Therefore, such a situation can be prevented that the electric power is supplied unnecessarily by the external power supply unit which is not requested by the user of the cellular phone to supply the charging electric power to the secondary battery.

Also, according to the cellular phone of the first embodiment of the present invention, the external power supply unit for supplying the electric power to the secondary battery can be decided in response to the priority that is set every external power supply unit to decide the order in which the electric power should be supplied to the secondary battery. Therefore, by using the optimum external power supply unit, the secondary battery can be charged.

In the cellular phone of the first embodiment of the present invention, as shown in FIG.3, the USB charging utilizing the USB is inhibited and the priority is set low. But the cellular phone of the present embodiment is not limited to this situation. The circumstances of the cellular phone of the present embodiment can be set at will.

Also, in the cellular phone of the first embodiment of the present invention, if the "charging OK or NG" of the external power supply unit 12n or the USB host referred to in the process in step S404 is "yes"(step S405, yes), it may be stored in the storing portion 16 that a flag indicating that the charging is handled by the external power supply unit 12n or the USB host is set up, and the external power supply utilized in the charging may be displayed on the displaying portion 21 while the flag is set up (i.e., in a period in which the charging is handled by the external power supply unit 12n or the USB host). In FIG.7, a display example displayed at a time of charging by using the cellular phone of the first embodiment of the present invention is shown. For example, when a flag indicating that the charging is handled by the USB host is set up in the storing portion 16 in a situation that the secondary battery 19 is charged by using the electric power from the USB host, a message 61 of "in USB charging" or a mark 62 indicating that the charging is being handled by the USB is displayed until the charging of the secondary battery 19 is completed, like a display example 1 displayed at a time of charging by using the cellular phone of the first embodiment of the present invention in FIG.7(a) or a display example 2 displayed at a time of charging by using the cellular phone of the first embodiment of the present invention in FIG.7(b).

In contrast, in the cellular phone of the first embodiment of the present invention, when the external power supply unit 12n or the USB host is eliminated from the charging object, it may be stored in the storing portion 16 that a flag indicating that the external power supply unit 12n or the USB host is eliminated from the charging object and also the external power supply not utilized in the charging may be displayed on the displaying portion 21 while the secondary battery 19 is charged by using another external power supply unit 12n or another USB host. For example, a message 63 indicating that "the USB charging is not available" is displayed until the charging of the secondary battery 19 by the external power supply unit 12n is completed, like a display example 3 displayed at a time of charging by using the cellular phone of the first embodiment of the present invention in FIG.7(c). According to this configuration, the user of the cellular phone can check which external power supply unit is now charging the cellular phone or the cellular phone is not charged now.

### (Second Embodiment)

In a cellular phone of a second embodiment of the present invention, an example of a user interface used to cause the user of the cellular phone to set the charging setting contents stored in the storing portion 16 of the cellular phone in the first embodiment will be explained hereunder. In FIG.8, a display example displayed on a display of the cellular phone of the second embodiment of the present invention is shown.

When the cellular phone holds the USB communication with the computer, two modes are particularly important for the cellular phone. One mode is such a mode that the cellular phone functions as the communication gear for the computer (referred to as a "communication mode" hereinafter), and the other mode is such a mode that the cellular phone functions as the external memory device when viewed from the computer (referred to as a "mini SD mode" hereinafter). In the cellular phones sold on the market up to now, the type of cellular phone that switches automatically its operation mode into either of two modes when it is connected to the computer via the USB cable is present. In FIG. 8(a), a display example that calls upon the user to set the mode at a time of USB communication by using the cellular phone in the prior art is shown. As shown in FIG. 8(a), the cellular phone 1 display 1. "Communication mode" and 2. "Mini SD mode" as choices, and shifts to the chosen mode when either of the mode 1 and the mode 2 is chosen by the operation of the inputting portion 22.

Like a display example 1 that calls upon the user to set the mode at a time of USB communication by using the cellular phone of the second embodiment of the present invention in FIG. 8(b), the cellular phone of the second embodiment of the present invention displays additionally 3. "Communication + charging mode" and 4. "Mini SD + charging mode" as the choices in addition to 1. "Communication mode" and 2. "Mini SD mode". When the mode 3 is chosen by the operation of the inputting portion 22, the "charging OK or NG" of the USB terminal stored in the storing portion 16 shown in FIG.3 is updated to "OK", and then the secondary battery 19 is charged by utilizing the electric power fed from the USB host as soon as the mobile phone is connected to the computer via the USB cable and is requested by the computer to perform the process of acting as the communication gear. Also, when the mode 4 is chosen by the operation of the inputting portion 22, the "charging OK or NG" of the USB terminal stored in the storing portion 16 shown in FIG.3 is updated to "OK", and then the secondary battery 19 is charged by utilizing the electric power fed from the USB host as soon as the mobile phone is connected to the computer via the USB cable and is requested by the computer to perform the process of acting as the external memory device. Also, like a display example 2 that calls upon the user to set the mode at a time of USB communication by using the cellular phone of the second embodiment of the present invention in FIG.8(c), when a check box 71 provided correspond to the choice "Do USB charging" is checked in advance, the "charging OK or NG" of the USB terminal stored in the storing portion 16 is updated to "OK" as soon as either the mobile phone is connected to the computer via the USB cable and is requested by the computer to perform the process of acting as the communication gear or the mobile phone is connected to the computer via the USB cable and is requested by the computer to perform the process of acting as the external memory device.

Also, like a display example that calls upon the user to set priority of the external power supply units by using the cellular phone of the second embodiment of the present invention in FIG. 8(d), the cellular phone 1 of the second embodiment of the present invention displays an image that calls upon the user to input the numerical value indicating the priority of various external power supply units respectively and updates the input numerical value (or the order corresponding to the numerical value) as the "priority" of each terminal stored in the storing portion 16. As the inputting method of the numerical value indicating the priority, the method of inputting the numerical value into a column 72, into which the numerical value is input, by pressing the 0 to 9 panel of the operation key, the method of setting a pull-down menu 73 that is displayed at the location where the external power supply unit is displayed and then inputting the numerical value by choosing the numerical value from the pull-down menu 73, etc. may be considered. As shown in FIG. 8(d), when no numerical value is input into the column 72 into which the numerical value is input, the operation of inputting the charging setting contents by the user of the mobile phone can be simplified much more by updating the "charging OK or NG" of the external power supply unit stored in the storing portion 16 into "NG" on the assumption that the external power supply unit is not utilized in the charging.

According to the cellular phone of the second embodiment of the present invention, the above user interface can guide the user to set the charging setting contents that are to be stored in the storing portion. Therefore, the user can set simply such charging setting contents.

In this case, the cellular phone 1 of the first embodiment or the second embodiment of the present invention is explained such that the controlling portion 15 controls open/close of the switch 17n by looking up the charging setting contents stored in the storing portion 16. The screen for calling upon the user to decide whether or not the charging should be allowed may be displayed on the display portion 21 every time when at least one of the power supply detecting portions 13n detects that the external power supply unit 12n or the USB host is connected to the external terminal 11 n or the USB terminal 12, and then the secondary battery may be charged by the external power supply chosen by the user of the cellular phone. According to this configuration, the secondary battery can be charged by the external power supply 12n that is intended by the user of the cellular phone to use as the external power supply in the charging.

### <Industrial Applicability>

According to the electronic equipment and the charging controlling method of the present invention, such an advantage can be achieved that, since the external power supply unit for supplying the electric power to the secondary battery can be decided in response to the criterion that is set every external power supply unit to indicate whether or not the charging of the secondary battery installed into that cellular phone by the concerned external power supply unit is allowed, such a situation can be prevented that the electric power is supplied unnecessarily by the external power supply unit that is not requested by the user of the cellular phone to supply the charging electric power to the secondary battery, and also such another advantage can be achieved that, since the external power supply unit for supplying the electric power to the secondary battery can be decided in response to the priority that is set every external power supply unit to decide the order in which the electric power should be supplied to the secondary battery, the secondary battery can be charged by using the optimum external power supply unit, and the electronic equipment and the charging controlling method are useful in the field of the electronic equipment to which the electric power can be supplied from a plurality of external power supply units.

## Claims

1. An electronic equipment, comprising:
at least two external power supply connecting portions, connected separately to at least two external power supply units whose electric power supply system is different respectively, and accepting an electric power from the external power supply units;
a secondary battery, connected to any one of the external power supply connecting portions, and charged by utilizing the electric power supplied to the external power supply connecting portions;
a switching portion, switching any one of the external power supply connecting portions and connecting the switched connecting portion to the secondary battery; and
a switching controlling portion, detecting the external power supply unit connected to the external power supply connecting portions, and controlling switching of the switching portion in response to whether or not an electric power supply by the external power supply unit is allowed, which is allocated to the detected external power supply unit.

2. An electronic equipment, comprising:
at least two external power supply connecting portions, connected separately to at least two external power supply units whose electric power supply system is different respectively, accepting an electric power from the external power supply units;
a secondary battery connected to any one of the external power supply connecting portions, and charged by utilizing the electric power supplied to the external power supply connecting portions;
a switching portion, switching any one of the external power supply connecting portions and connecting the switched connecting portion to the secondary battery; and
a switching controlling portion, detecting the external power supply unit connected to the external power supply connecting portions, and controlling switching of the switching portion in response to priority that is allocated to the detected external power supply unit.

3. The electronic equipment according to claim 2, wherein the switching controlling portion connects the external power supply unit whose allocated priority is highest among the detected external power supply units to the secondary battery.

4. The electronic equipment according to claim 2 or 3, wherein the external power supply connecting portions contain at least a first external power supply connecting portion and a second external power supply connecting portion,
the first external power supply connecting portion is connected to a first external power supply unit of at least two external power supply units,
the second external power supply connecting portion is connected to a second external power supply unit of at least two external power supply units, and
the switching controlling portion for switching the external power supply connecting portion to the second external power supply connecting portion when connection of the second external power supply unit, priority of which is higher than the first external power supply unit, to the second external power supply connecting portion is detected after the first external power supply connecting portion is connected to the secondary battery, and then connecting the second external power supply connecting portion to the secondary battery.

5. The electronic equipment according to claim 2 or 3, wherein the external power supply connecting portions contain at least a first external power supply connecting portion and a second external power supply connecting portion,
the first external power supply connecting portion is connected to a first external power supply unit of at least two external power supply units,
the second external power supply connecting portion is connected to a second external power supply unit of at least two external power supply units, and
the switching controlling portion for connecting continuously the first external power supply connecting portion to the second battery when connection of the second external power supply unit, priority of which is lower than the first external power supply unit, to the second external power supply connecting portion is detected after the first external power supply connecting portion is connected to the secondary battery.

6. The electronic equipment according to claim 1, further comprising:
an operating portion for accepting an inputting operation;
wherein the operating portion accepts the inputting operation to set whether or not an electric power supply allocated to at least two external power supply units is allowed, and
the switching controlling portion controls switching of the switching portion in response to whether or not an electric power supply by the external power supply unit is allowed, which is accepted by the operating portion and allocated to the external power supply units.

7. The electronic equipment according to any one of claims 2 to 5, further comprising:
an operating portion for accepting an inputting operation;
wherein the operating portion accepts the inputting operation to set the priority allocated to at least two external power supply units, and
the switching controlling portion controls switching of the switching portion in response to the priority accepted by the operating portion and allocated to the external power supply unit.

8. The electronic equipment according to claim 6, further comprising:
a storing portion for storing various information;
wherein the storing portion stores whether or not an electric power supply is allowed, which is accepted by the operating portion and is allocated to the external power supply units, and
the switching controlling portion controls switching of the switching portion in response to whether or not an electric power supply by the external power supply unit is allowed, which is stored in the storing portion and is allocated to the external power supply units.

9. The electronic equipment according to claim 7, further comprising:
a storing portion for storing various information;
wherein the storing portion stores the priority that is allocated to the external power supply units, and
the switching controlling portion controls switching of the switching portion in response to the priority that is allocated to the external power supply units.

10. The electronic equipment according to any one of claims 2 to 5, further comprising:
a preliminary charging controlling portion driven by a second electric power that is smaller than a first electric power required to cause the switching controlling portion to perform switching control;
wherein the preliminary charging controlling portion detects the external power supply units connected to the external power supply connecting portions, and controls switching of the switching portion in response to the priority that is allocated fixedly to the detected external power supply unit.

11. The electronic equipment according to any one of claims 1 to 10, wherein any one of at least two external power supply connection portions is a USB terminal that accepts the electric power supplied from the external power supply unit via USB (Universal Serial Bus).

12. The electronic equipment according to any one of claims 1 to 11, wherein any one of at least two external power supply connection portions is an AC power supply terminal that accepts the electric power supplied from the external power supply unit as an AC power supply.

13. The electronic equipment according to any one of claims 1 to 12, wherein any one of at least two external power supply connection portions is a receiving coil that receives the electric power transmitted from the external power supply unit by an electromagnetic induction system.

14. A charging controlling method of supplying an electric power to a secondary battery installed into an electronic equipment from any one of at least two external power supply units whose electric power supply system is different respectively, comprising:
detecting the external power supply unit connected to the electronic equipment;
referring to whether or not an electronic power supply by the external power supply unit is allowed, which is allocated to the detected external power supply unit; and
supplying the electric power from the external power supply unit that is allowed to supply the electric power to the secondary battery.

15. A charging controlling method of supplying an electric power to a secondary battery installed into an electronic equipment from any one of at least two external power supply units whose electric power supply system is different respectively, comprising:
detecting the external power supply unit connected to the electronic equipment;
referring to priority that is allocated to the detected external power supply unit; and
supplying the electric power from the external power supply unit whose allocated priority is higher to the secondary battery.

## Amended claims

### Amended claims under Art. 19.1 PCT

**1.** (Amended) An electronic equipment, comprising:
at least two external power supply connecting portions, connected separately to at least two external power supply units whose electric power supply system is different respectively, accepting an electric power from the external power supply units;
a secondary battery, connected to any one of the external power supply connecting portions, and charged by utilizing the electric power supplied to the external power supply connecting portions;
a switching portion, switching any one of the external power supply connecting portions and connecting the switched connecting portion to the secondary battery; and
a switching controlling portion, detecting the external power supply unit connected to the external power supply connecting portions, and controlling switching of the switching portion in response to whether or not an electric power supply by the external power supply unit is allowed, which is allocated to the detected external power supply unit;
wherein any one of at least two external power supply connection portions is a USB terminal that accepts the electric power supplied from a USB host (Universal Serial Bus) as the external power supply unit via USB, and
the switching controlling portion control switching of the switching portion in response to whether or not the electric power supply by the USB host is allowed, which is allocated to the detected USB host.

**2.** (Amended) The electronic equipment according to claim 1, further comprising a displaying portion for providing a display that calls upon a user to set a mode at a time of USB communication;
wherein only the USB host as the external power supply unit is connected to the displaying portion, and
when a communication is held between the electronic equipment and the USB host via the USB terminal, the displaying portion provides a display that calls upon the user to choose either of a first mode in which the communication is held but the charging is not executed and a second mode in which the communication and/or the charging are/is executed, as a mode setting at the USB communication.

**3.** (Amended) The electronic equipment according to claim 1, further comprising a preliminary charging controlling portion driven by a second electric power that is smaller than a first electric power required to cause the switching controlling portion to perform switching control;
wherein, when only the USB host is connected and the communication with the USB host is not held, the preliminary charging controlling portion connects the USB terminal to the secondary battery as the external power supply unit to supply the electric power, irrespective of whether or not an electric power supply by the USB host is allowed.

**4.** (Amended) The electronic equipment according to claim 1, wherein, when the communication is held between the electronic equipment and the USB host via the USB terminal, the preliminary charging controlling portion decides a value of the electric power supplied from the USB host by holding the communication with the USB host, and connects the USB terminal to the secondary battery to supply the electric power.

**5.** (Deleted)

**6.** (Deleted)

**7.** (Deleted)

**8.** (Deleted)

**9.** (Deleted)

**10.** (Deleted)

**11.** (Deleted)

**12.** (Deleted)

**13.** (Deleted)

**14.** (Deleted)

**15.** (Deleted)
